# NEUE EUROPÄISCHE PATENTSCHRIFT

(11) **EP 0 945 710 B2**
(45) Veröffentlichungstag und Bekanntmachung des Hinweises auf die Entscheidung über den Einspruch: **28.10.2009**
(45) Hinweis auf die Patenterteilung: 08.09.2004
(21) Anmeldenummer: 99104742.4
(22) Anmeldetag: 10.03.1999
(51) Int. Cl.: G01D 11/28, G01D 13/04

(54) **Anzeigeinstrument**
Indicating instrument
Instrument indicateur

(30) Priorität: 21.03.1998 DE 19812549; 05.02.1999 DE 19904597
(43) Veröffentlichungstag der Anmeldung: 29.09.1999
(73) Patentinhaber: Continental Automotive GmbH, 30165 Hannover (DE)
(72) Erfinder: Wilhelm, Heinz Günther, 65191 Weisbaden (DE); Wolf, Helmut, Dr., 65239 Hochheim (DE); Döbler, Michael, 64832 Babenhausen (DE); Pöhlmann, Frank, 64850 Schaafheim (DE); Bauer, Benoît, 63500 Seligenstadt (DE); Zech, Stephan, 65343 Eltville (DE); Turck, Heinz, 65779 Kelkheim (DE)

(56) Entgegenhaltungen:
- EP-A- 0 078 372
- EP-A- 0 301 439
- EP-A- 0 536 485
- EP-A- 0 765 774
- CH-A- 672 954
- DE-A- 4 129 057
- DATABASE WPI Section Ch, Week 9634 Derwent Publications Ltd., London, GB; Class A85, AN 96-337813 XP002105316 & JP 08 155988 A (FUJIMORI IND CO LTD) , 18. Juni 1996

## Beschreibung

Die Erfindung betrifft ein Anzeigeinstrument, insbesondere für ein Fahrzeug, mit einem mit einer Zeigerwelle drehfest verbundenen und von der Zeigerwelle antreibbaren Zeiger, einer Zeigerbeleuchtung und einem Zifferblatt, wobei das Zifferblatt eine Skalierung zur Darstellung eines Wertes einer von dem Zeiger angezeigten Größe aufweist.

Anzeigeinstrumente der vorstehenden Art werden beispielsweise als Tachometer oder Drehzahlmesser in heutigen Kraftfahrzeugen eingesetzt und sind allgemein bekannt. Das Zifferblatt eines solchen Zeigerinstrumentes hat Markierungen für Zahlen, Symbole oder Skalenstriche, die sich durch ihre Lichtdurchlässigkeit oder ihre Färbung von den übrigen Bereichen abheben. Ein solches Zifferblatt besteht beispielsweise aus einer farbigen, überwiegend lichtdurchlässigen Folie, die auf einem Lichtleiter aufgebracht ist. Hinter dem Lichtleiter ist eine Lampe als Lichtquelle angeordnet. Mit der Lampe wird Licht in den Lichtleiter eingeleitet, welches durch das Zifferblatt zu einem Betrachter gelangt. Der Zeiger hat dabei eine als Lichtleiter ausgeführte Zeigerwelle und eine mit dieser Zeigerwelle drehbar angeordnete, beleuchtbare Zeigerfahne. Der Betrachter nimmt daher einen mittels Lichtleiter beleuchtbaren Zeiger vor einem durchleuchteten Zifferblatt wahr.

Nachteilig bei einem solchen Zeigerinstrument ist, daß der drehbeweglich angeordnete Zeiger zum Schutz gegen Beschädigungen und schädigende Umwelteinflüsse hinter einer Abdeckscheibe angeordnet werden muß. Diese soll sowohl glasklar als auch im wesentlichen frei von Reflexionen sein, um eine sichere Ablesbarkeit zu gewährleisten. Diese Anforderungen lassen sich nur durch eine verhältnismäßig aufwendige Formgebung der Scheibe realisieren, wodurch zugleich die Gestaltungsmöglichkeit der Armaturentafel eingeschränkt wird. Weiterhin wirkt sich nachteilig aus, daß die Abdeckscheibe leicht verkratzt, wodurch die Ablesbarkeit erschwert wird und ein minderwertiger Eindruck entsteht. Darüber hinaus weist das bekannte Zeigerinstrument nachteilig eine große Bautiefe auf.

Aus EP-A-0 078 372 ist ein Anzeigeinstrument bekannt, in dem das Zifferblatt durchscheinend ist und der Zeiger auf der einem Betrachter zugewandten Vorderseite angeordnet ist. Aus der DE-A-23 53 645 ist eine Anzeige mit den Merkmalen des Oberbegriffs des Anspruch 1 bekannt. Die EP-A-03 01 439 beschreibt eine Anzeige mit einem transluzenten Zifferblatt, bei der der Zeiger vor dem Zifferblatt angeordnet ist.

Der Erfindung liegt das Problem zugrunde, die Verbesserung der Ablesbarkeit zu erreichen.

Dieses Problem wird mit dem im Anspruch 1 definierten Anzeigeinstrument gelöst.

Gemäß Erfindung weist die Grundfläche des Zifferblattes eine erste Farbe und die Skalierung eine zweite Farbe auf, wobei die Grundfläche des Zifferblattes eine geringe Transmission bei einer Beleuchtung mit Licht in der Farbe der Skalierung aufweist. Die Grundfläche des Zifferblatts, die den optischen Hintergrund für die beispielsweise Skalenstriche und/oder Beschriftungen und/oder alphanumerische Zeichen und/oder Symbole aufweisende Skalierung bildet, sperrt daher den Durchtritt von Licht mit der Farbe der Skalierung, wohingegen dieses Licht durch die Skalierung hindurchtritt, die die Ablesbarkeit erhöhend somit besonders kontrastreich gegenüber der Zifferblattgrundfläche dargestellt wird. Um die optische Sperrfunktion zu bewirken, weisen die Wellenlängenbereiche der Farben der Grundfläche des Zifferblattes und der Skalierung vorzugsweise keine Überschneidung auf und sind voneinander möglichst weit beabstandet. In der Normfarbtafel befinden sich die Farben dementsprechend an weit voneinander entfernten Orten. Ein sowohl bei großer Umgebungshelligkeit als auch bei Umgebungsdunkelheit sehr gut ablesbares Anzeigeinstrument wird durch einen hohen Kontrast zwischen Skalierung und Grundfläche des Zifferblattes dadurch erreicht, daß eine Lichtquelle zu einer transmissiven Beleuchtung des Zifferblattes vorgesehen ist und daß die Farbe der Lichtquelle in etwa der Farbe der Skalierung entspricht. Dadurch erreicht das Licht der Lichtquelle den Betrachter durch die Grundfläche des Zifferblattes hindurch nicht, jedoch ist die Skalierung aufgrund des durch diese hindurchtretenden Lichts deutlich und in starkem Kontrast zur Grundfläche erkenn- und sehr gut ablesbar.

Eine Verbesserung der Ablesbarkeit des Anzeigeinstrumentes wird dadurch erreicht, daß der Zeiger in einer der Farbe der Grundfläche des Zifferblattes in etwa entsprechenden Farbe beleuchtet ist. Damit ist der Zeiger durch die Grundfläche des Zifferblattes hindurch sehr gut erkennbar, aber durch die Skalierung hindurch ist der Zeiger nicht wahrnehmbar, da die Farbe der Skalierung eine Sperre für das Licht des Zeigers darstellt. Auf diese Weise wird wirkungsvoll ein Verdecken der Skalierung durch den Zeiger ausgeschlossen.

Zur Beleuchtung des Anzeigeinstruments sind besonders wenige Lichtquellen erforderlich und die Anzeige weist einen hohen Kontrast auf, da die Grundfläche des Zifferblattes und die Skalierung jeweils eine hohe Transmission bei einer Beleuchtung mit Licht in einer ihrer jeweiligen Farbe in etwa entsprechenden Farbe aufweisen.

Eine besonders vorteilhafte Weiterbildung der Erfindung ist gegeben, wenn das Zifferblatt diffus lichtdurchlässig ist. Hierdurch wird der Blick des Betrachters auf die hinter dem Zeiger liegenden Bauteile des Zeigerinstrumentes verwehrt, wohingegen der beleuchtete Zeiger selbst - zumindest aber seine Kontur - sichtbar bleibt. Eine zusätzliche Abdeckung der rückwärtigen Bauteile ist daher nicht erforderlich.

Die Ablesbarkeit wird wesentlich erhöht, wenn die Oberfläche der Außenseite und/oder der Innenseite des Zifferblattes reflexionsmindernd ausgeführt ist. Hierdurch bleibt die Kontur des Zeigers auch unter ungünstigen Lichterhältnissen erkennbar, wobei die Ablesbarkeit selbst durch schräg einfallendes Auflicht, z. B. Sonnenlicht, kaum verschlechtert wird. Reflexionsmindernde Eigenschaften der Oberfläche der Innenseite des Zifferblattes sorgen dafür, daß Licht der Zeigerbeleuchtung nicht am Zifferblatt reflektiert wird. Eine Schwächung der Leuchtstärke des Zeigers wird somit vermieden.

Man könnte sich vorstellen, die Oberfläche der Außenseite des Zifferblattes mit einer reflexionsmindernden Folie zu versehen. Besonders kostengünstig und einfach ist es jedoch, wenn gemäß einer vorteilhaften Weiterbildung der Erfindung die Oberfläche der Außenseite des Zifferblattes matt ist, womit durch Auflicht hervorgerufene Reflexionen wirkungsvoll vermindert werden können. Bei der Fertigung des Anzeigeinstrumentes kann die matte Oberfläche vorteilhaft in einfacher Weise erzeugt werden, wenn die Oberfläche der Außenseite des Zifferblattes eine matt aushärtende Lackierung oder eine Aufrauhung aufweist.

Eine günstige Gestaltung des Anzeigeinstrumentes ist gegeben, wenn das Zifferblatt eine Trübscheibe ist. Hierdurch können Schattenbildungen, verursacht durch rückwärtige Bauteile, zuverlässig vermieden und ein homogen erscheinendes Zifferblatt geschaffen werden. Der Werkstoff der Trübscheibe, für die auch Milchglas ein umgangssprachlicher Ausdruck ist, kann z. B. ein Kunststoff oder Glas sein.

Besonders günstig ist hierbei eine Weiterbildung der Erfindung, bei der die Skalierung in das Zifferblatt eingraviert ist. Diese Ausführung ist einerseits gegen Beschädigungen gut geschützt und bietet andererseits die Möglichkeit, die Skalierung durch eine entsprechend angeordnete Lichtquelle helleuchtend erscheinen zu lassen.

Gemäß einer anderen vorteilhaften Weiterbildung der Erfindung weist die Zeigerbeleuchtung eine drehfest mit dem Zeiger verbundene Lichtquelle auf. Dadurch kann der Lichtübertragungsweg im Zeiger besonders kurz sein, womit die Lichtverluste minimiert werden.

Besonders hell und damit auch zugleich besonders gut ablesbar ist das Anzeigeinstrument gestaltet, wenn die Lichtquelle an einer Zeigerfahne des Zeigers angeordnet ist. Die derart ausgeführte Zeigerfahne tritt bei dieser Ausführung gut ablesbar hervor und ermöglicht beispielsweise auch eine farbige Ausführung des Zifferblattes. Die Lichtquelle kann dabei selbst um eine Drehachse drehbar und vorzugsweise in Form einer Zeigerfahne ausgeführt sein und so die Zeigerfahne ersetzen.

Der Zeiger kann vorteilhaft besonders leicht ausgeführt werden, wenn die Zeigerbeleuchtung eine feststehende Lichtquelle aufweist und wenn von der Lichtquelle abgestrahltes Licht in den Zeiger einkoppelbar ist. Auf diese Weise kann ein den Zeiger antreibender Zeigerantrieb, z. B. ein Meßwerk, ein lediglich geringes Drehmoment erzeugend ausgebildet werden. Es ist dabei möglich, von der Lichtquelle abgestrahltes Licht in eine als Lichtleiter ausgebildete Zeigerwelle einzukoppeln und von dort in die Zeigerfahne weiterzuleiten; es kann aber auch vorgesehen sein, das Licht direkt in einen Zeigerkopf einzukoppeln und von dort in die Zeigerfahne zu leiten.

Gemäß einer anderen vorteilhaften Weiterbildung der Erfindung ist im Übertragungsweg des von der Lichtquelle abgestrahlten Lichts zwischen Lichtquelle und Zeiger ein Lichtleiter angeordnet, so daß die Lichtquelle nicht räumlich dem Zeiger zugeordnet sein muß, sondern freizügig im Anzeigeinstrument angeordnet sein kann.

Eine andere vorteilhafte Ausführungsform der Erfindung ist gegeben, wenn der Zeiger ein Mittel zur Projektion der von der Lichtquelle abgegebenen Lichtstrahlung auf einen Teilbereich des Zifferblattes aufweist. Dieses Mittel kann das Licht beispielsweise reflektieren und kann hierzu drehbar ausgeführt und in der Nähe der Lichtquelle angeordnet sein. Hierdurch wird ein Lichtbalken auf das Zifferblatt projiziert, welcher einen konventionellen Zeiger ersetzt oder es wird ein Bereich des Zifferblattes proportional zu der darzustellenden Bezugsgröße beleuchtet.

Eine besonders vorteilhafte Ausführungsform der Erfindung ist gegeben, wenn das Zifferblatt eine zum Ablesen des unbeleuchteten Zeigers geeignete Lichtdurchlässigkeit aufweist. Hierbei ist der Kontrast zwischen dem Zeiger und dem Zifferblatt derart gewählt, daß eine Ablesbarkeit des Zeigerinstrumentes auch bei einem Ausfall der Lichtquelle möglich ist, was als Notfallfunktion wesentlich zu einer erhöhten Betriebssicherheit beiträgt.

Man könnte sich vorstellen, daß das Anzeigeinstrument aus einem einzelnen Zeigerinstrument besteht. Jedoch treten der geringe Bauraumbedarf und die gute Übersichtlichkeit des erfindungsgemäßen Instrumentes besonders vorteilhaft hervor, wenn das Anzeigeinstrument ein zumindest zwei Anzeigen aufweisendes Kombinationsinstrument ist: Gemäß einer vorteilhaften Weiterbildung der Erfindung ist dabei der mit dem Anzeigeinstrument darstellbare Informationsumfang besonders hoch, wenn eine der Anzeigen ein Zeigerinstrument und eine weitere ein Bildschirm ist, wobei das Zifferblatt im Bereich des Bildschirms eine Ausnehmung aufweist. Vorzugsweise ist der Bildschirm ein LCD und weist der dem Betrachter zugewandte Frontpolarisator des LCD eine reflexionsmindernde Oberfläche auf. Auf diese Weise ist einerseits der Bildschirm als LCD sehr betriebssicher und zudem kostengünstig auch in großen Serien herstellbar und andererseits eine Spiegelung - insbesondere bei starkem Auflicht - an der Bildschirmoberfläche die Ablesbarkeit verbessernd weitestgehend vermieden.

Eine den Betrachter irritierende und die Ablesbarkeit des Anzeigeinstruments erschwerende Reflexion durch Lichteinfall auf die Oberfläche des Zifferblatts und des Bildschirms wird durch eine reflexionsmindernde Gestaltung der Oberflächen weitestgehend verhindert. Insbesondere bei Kraftfahrzeugen kann aber das Anzeigeinstrument bei geringer Umgebungshelligkeit (nachts) durch das von ihm selbst abgestrahlte Licht zu den Fahrzeugführer ablenkenden Spiegelungen in Seitenscheiben des Fahrzeugs führen. Diese Reflexionen werden wirkungsvoll dadurch beseitigt, daß das Anzeigeinstrument gegenüber der Vertikalen in Richtung auf einen Betrachter zu nach unten geneigt ist. Von dem Anzeigeinstrument ausgehendes Licht wird daher in Richtung eines unteren Fahrzeugbereichs, in dem üblicherweise keine reflektierenden Oberflächen vorhanden sind, abgestrahlt. Dafür ist bereits eine Neigung des Anzeigeinstrumentes um wenige Grad gegenüber der Vertikalen hinreichend.

Für die Farbe der Grundfläche des Zifferblattes und die Farbe der Skalierung sind verschiedene, in der Normfarbtafel weit beabstandete Farbpaare wie zum Beispiel gelbgrün und violett denkbar. Eine sichere Erkennbarkeit und gute Ablesbarkeit der Anzeige wird hingegen am besten erreicht, wenn die Farbe der Grundfläche des Zifferblattes rot und die Farbe der Skalierung blau ist.

Man könnte sich vorstellen, das Zifferblatt durchzufärben und in Bereichen der Skalierung ein Material anderer Farbe zum Beispiel einzusetzen oder einzuspritzen. Demgegenüber ergibt sich eine besonders einfache und kostengünstige Herstellung des Zifferblattes, wenn die Farben der Grundfläche des Zifferblattes und der Skalierung vorzugsweise auf das Zifferblatt aufgedruckt sind.

Wenn gemäß einer anderen vorteilhaften Weiterbildung der Erfindung das Zifferblatt in seinen Bereichen außerhalb von Anzeigen eine Maskierung geringer Transmissionen aufweist, wird die Aufmerksamkeit des Betrachters ohne Ablenkung auf die wesentlichen Anzeigebereiche konzentriert. Die Maskierung kann dabei z. B. eine Blende oder ein Schwarzdruck sein.

Insbesondere bei Anzeigeinstrumenten, die - wie zum Beispiel in Fahrzeugen - fortwährend Umwelteinflüssen ausgesetzt sind und gegebenenfalls gereinigt werden müssen, ist es von besonderem Vorteil, wenn das Zifferblatt an seiner dem Betrachter zugewandten Außenseite eine kratzfeste Beschichtung aufweist.

Die Erfindung läßt zahlreiche Ausführungsformen zu. Zur weiteren Verdeutlichung ihres Grundprinzips sind verschiedene davon in der Zeichnung dargestellt und werden nachfolgend beschrieben. Diese zeigt in
- Fig. 1: in einer seitlichen Ansicht eine geschnittene Prinzipdarstellung eines erfindungsgemäßen Anzeigeinstrumentes,
- Fig. 2: das in Figur 1 dargestellte erfindungsgemäße Anzeigeinstrument in einer perspektivischen Prinzipdarstellung,
- Fig. 3: eine Vorderansicht eines zweiten erfindungsgemäßen Anzeigeinstruments,
- Fig. 4: eine geschnittene Seitenansicht nach Linie IV-IV des Anzeigeinstruments aus Figur 3,
- Fig. 5: eine geschnittene Seitenansicht ähnlich Figur 4 eines weiteren Anzeigeinstruments.

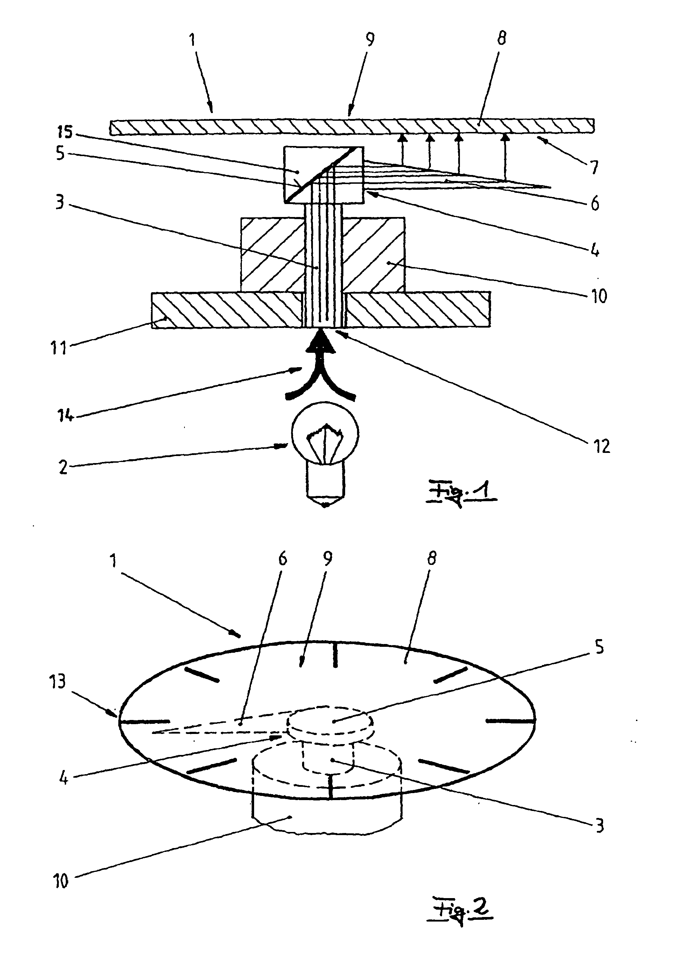

Die Figur 1 zeigt ein Zeigerinstrument 1 in einer seitlichen, geschnittenen Prinzipdarstellung. Symbolhaft ist eine Lichtquelle 2 dargestellt, deren abgegebene Lichtstrahlung 14 in eine als Lichtleiter ausgeführte Welle 3 eines Zeigers 4 eingeleitet wird. Die Lichtstrahlung wird anschließend mittels eines in einem Zeigerkopf 15 angeordneten Reflektors 5 in eine Zeigerfahne 6 umgelenkt. An der Zeigerfahne 6 tritt die Lichtstrahlung aus und wird gegen eine Innenseite 7 eines diffus lichtdurchlässigen Zifferblattes 8 projiziert. Auf einer einem Betrachter zugewandten Außenseite 9 des Zifferblattes 8 ist für den Betrachter entsprechend der Stellung des Zeigers 4 ein heller Lichtbalken erkennbar. Nicht dargestellt ist eine Skala, welche auf der Innenseite 7 des Zifferblattes 8 angeordnet ist. Zur Auslenkung des Zeigers 4 wird die Welle 3 von einem Zeigerantrieb 10 angetrieben, welcher auf einer Leiterplatte 11 angeordnet ist. Die Leiterplatte 11 schirmt zugleich die Innenseite 7 des Zifferblattes 8 gegenüber der Lichtquelle 2 ab und besitzt eine Lichteinlaßöffnung 12 für den ungehinderten Zugang der Lichtstrahlung zu der als Lichtleiter ausgeführten Zeigerwelle 3.

Figur 2 zeigt das in Figur 1 dargestellte erfindungsgemäße Zeigerinstrument 1 in einer perspektivischen Prinzipdarstellung in Blickrichtung auf die Außenseite 9 des Zifferblattes 8. Eine Skala 13 ist hierbei lediglich angedeutet und kann je nach Verwendungszweck insbesondere um Ziffern ergänzt sein. Durch das diffus lichtdurchlässige Zifferblatt 8 sind die Konturen der Zeigerfahne 6, des Zeigerkopfes 15 und der Zeigerwelle 3 des Zeigers 4 lediglich schwach zu erkennen und daher gestrichelt dargestellt. Deutlich hervor tritt die Zeigerfahne 6, sobald diese mittels der nicht dargestellten Lichtquelle beleuchtet wird. Die Zeigerfahne 6 ist mittels des die Zeigerwelle 3 antreibenden Zeigerantriebs 10 auslenkbar, wobei der Zeigerantrieb 10 von einem Meßwerk gebildet wird und nur teilweise dargestellt ist.

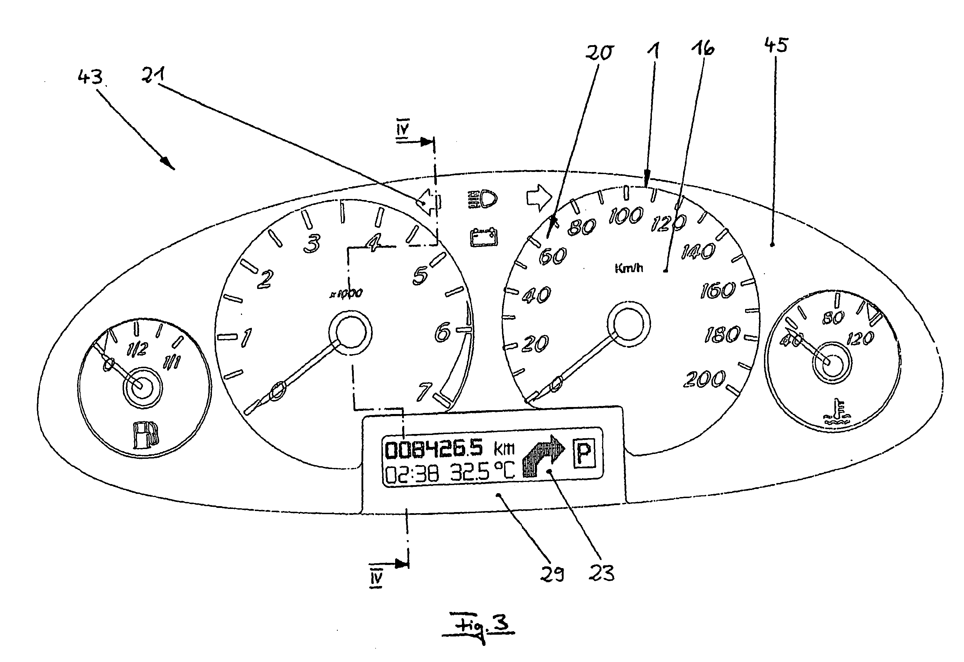

In Figur 3 ist ein von einem Kombinationsinstrument 43 gebildetes Anzeigeinstrument in einer Vorderansicht dargestellt. Das für den Einbau in eine Instrumententafel eines Kraftfahrzeugs vorgesehene Kombinationsinstrument 43 weist mehrere Zeigerinstrumente 1 und als weitere Anzeigen einen Bildschirm 23 sowie Anzeigefelder 21 auf. Der von einer Flüssigkristallanzeige gebildete Bildschirm 23 wird von einer Blende 29 eingerahmt. Symbole der Anzeigefelder 21 sind ebenso wie eine Maskierung 45 und Skalierungen 20 der einzelnen Zeigerinstrumente 1 auf ein Zifferblatt 16 aufgedruckt.

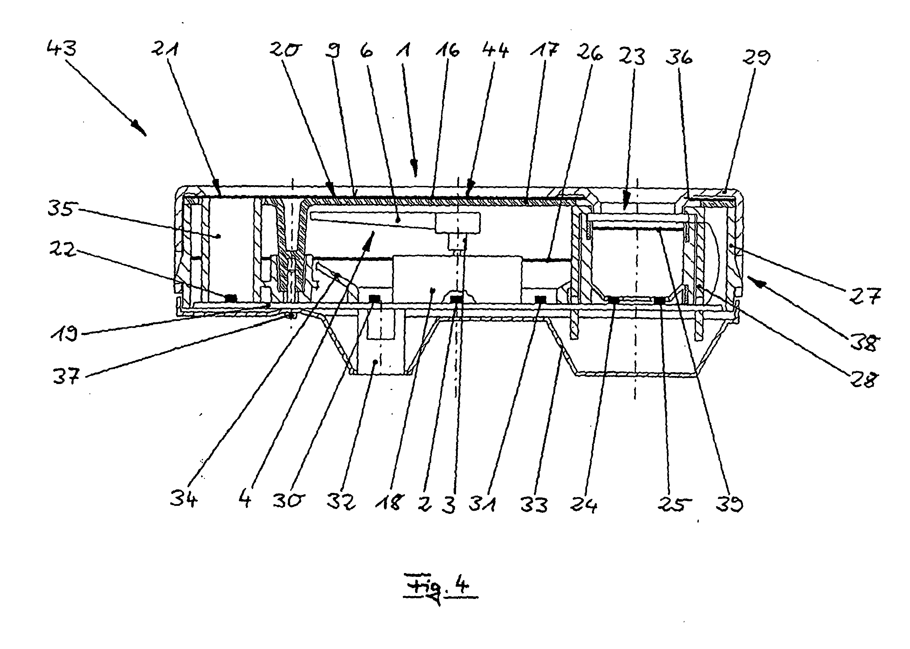

Einen Schnitt entlang Linie IV-IV (in Figur 3) des Kombinationsinstrumentes 43 zeigt Figur 4. Es ist zu erkennen, daß auf einer Leiterplatte 19 ein Schrittmotor 18 als Zeigerantrieb eines Zeigerinstrumentes 1 angeordnet ist. Der Schrittmotor 18 treibt mittels einer Zeigerwelle 3 einen eine Zeigerfahne 6 aufweisenden Zeiger 4 an. Mittels einer ebenfalls auf der Leiterplatte 19 befestigten Lichtquelle 2 wird über eine Lichteinkoppelung in die Zeigerwelle 3 und Lichtumlenkung in die Zeigerfahne 6 der Zeiger 4 beleuchtet. Ein Gehäuse 27 trägt an der einem Betrachter zugewandten Vorderseite des Kombinationsinstrumentes 43 das Zifferblatt 16 und nimmt sowohl die Leiterplatte 19 als auch einen rückwärtigen Deckel 33 auf. Mittels einer in einem Lichtschacht 35, der in dem Gehäuse 27 ausgebildet ist, angeordneten Lichtquelle 22 ist das Anzeigefeld 21 beleuchbar. Entsprechende Lichtquellen 24, 25 beleuchten über einen zur Lichtvergleichmäßigung zwischengeschalteten Diffusor 39 den mittels eines Halterahmens 28 an der Leiterplatte 19 gehalterten Bildschirm 23. Eine mittels einer Verklipsung 38 mit dem Gehäuse 27 verbundene Blende 29 begrenzt einen sichtbaren Ausschnitt des Bildschirms 23.

Das Zifferblatt 16 wird von einem Zifferblattträger 17 gestützt, der mittels diesen und den Deckel 33 an der Leiterplatte 19 befestigenden Schrauben 37 festgelegt ist. An seiner dem Betrachter zugewandten Außenseite 9 ist das Zifferblatt 16 mit einer matt aushärtenden und kratzfesten Lackierung versehen. Darüber hinaus weist das Zifferblatt 16 eine Ausnehmung 36 auf, so daß der Bildschirm 23 nicht von dem Zifferblatt 16 überdeckt wird. Die Skalierung 20 des Zifferblattes 16 ist in blauer Farbe und eine den optischen Hintergrund der Skalierung 20 bildende Grundfläche 44 des Zifferblatts 16 in roter Farbe auf dieses aufgedruckt. Blaues Licht abstrahlende Lichtquellen 30, 31 (bei denen es sich ebenso wie bei den Lichtquellen 2, 22, 24, 25 um LEDs handelt) sind im Bereich des Zeigerinstrumentes 1 auf der Leiterplatte 19 angeordnet. Ein Reflektor 34 erhöht die Lichtausbeute dieser Lichtquellen 30, 31, und ein zwischen Lichtquellen 30, 31 und Zifferblatt 16 angeordneter Diffusor 26 vergleichmäßigt das Licht. Bei eingeschalteten Lichtquellen 30, 31 erscheint die Grundfläche 44 des Zifferblatts 16 dunkel, wohingegen die Skalierung 20 aufgrund ihres Blaudruckes erleuchtet ist. Bei rot beleuchteter Zeigerfahne 6 ist diese durch die rote Grundfläche 44 sehr gut ablesbar, wohingegen der Blaudruck der Skalierung 20 einen Durchtritt des von der Zeigerfahne 6 ausgehenden roten Lichts verhindert. Auf diese Weise ist eine Verdeckung der Skalierung durch die Zeigerfahne ausgeschlossen.

Auf der Rückseite der Leiterplatte 19 ist eine Steckeraufnahme 32 zur elektrischen Kontaktierung des Kombinationsinstrumentes 43 mit der Fahrzeugelektronik angebracht.

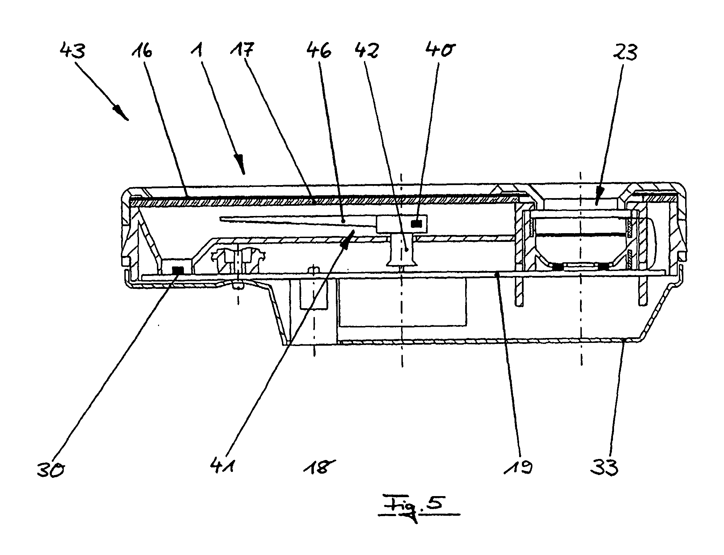

Ein dem Anzeigeinstrument aus Figur 4 ähnliches weiteres Kombinationsinstrument 43 zeigt Figur 5; entsprechende Bauteile sind hierbei wie auch bei den vorhergehenden Figuren mit gleichen Bezugszeichen versehen.

Im Unterschied zu den vorangegangenen Ausführungsbeispielen weist hier ein Zeigerinstrument 1 des Kombinationsinstrumentes 43 einen Zeiger 41 mit einer von einer Zeigerwelle 42 getragenen Zeigerfahne 46 auf, die von einer in dem Zeiger 41 angeordneten Lichtquelle 40 beleuchtet wird. Die Lichtquelle 40, die hier eine LED ist, ist in nicht dargestellter Weise mit einer Leiterplatte 19 zur Energieversorgung elektrisch kontaktiert.

## Patentansprüche

1. Anzeigeinstrument, insbesondere für ein Fahrzeug, mit einem mit einer Zeigerwelle drehfest verbundenen und von der Zeigerwelle antreibbaren Zeiger, einer Zeigerbeleuchtung und einem Zifferblatt, wobei das Zifferblatt eine Skalierung zur Darstellung eines Wertes einer von dem Zeiger angezeigten Grosse aufweist, wobei das Zifferblatt (8, 16) durchscheinend ist und der Zeiger (4) auf der einem Betrachter abgewandten Rückseite des Zifferblattes (8) angeordnet ist, wobei die Skalierung (13, 20) auf der dem Betrachter abgewandten Rückseite des Zifferblattes (8, 16) angeordnet ist, wobei die Grundfläche (44) des Zifferblattes (16) eine erste Farbe und die Skalierung (20) eine zweite Farbe aufweist, **dadurch gekennzeichnet, daß** die Grundfläche (44) des Zifferblattes (16) eine geringe Transmission bei einer Beleuchtung mit Licht in der Farbe der Skalierung (20) aufweist, dass eine Lichtquelle (30, 31) zu einer transmissiven Beleuchtung des Zifferblattes (16) vorgesehen ist und dass die Farbe der Lichtquelle (30, 31) in etwa der Farbe der Skalierung (20) entspricht, dass der Zeiger (4, 41) in einer der Farbe der Grundfläche (44) des Zifferblattes (16) in etwa entsprechenden Farbe beleuchtet ist und dass die Grundfläche (44) des Zifferblattes (16) und die Skalierung (20) jeweils eine hohe Transmission bei einer Beleuchtung mit Licht in einer ihrer jeweiligen Farbe in etwa entsprechenden Farbe aufweisen.

2. Anzeigeinstrument nach Anspruch 1, **dadurch gekennzeichnet, dass** das Zifferblatt (8, 16) diffus lichtdurchlässig ist.

3. Anzeigeinstrument nach Anspruch 1 oder 2, **dadurch gekennzeichnet, dass** die Oberfläche der Außenseite (9) und/oder der Innenseite (7) des Zifferblattes (8, 16) reflexionsmindernd ist.

4. Anzeigeinstrument nach einem der vorhergehenden Ansprüche, **dadurch gekennzeichnet, dass** die Oberfläche der Außenseite (9) des Zifferblattes (8, 16) matt ist.

5. Anzeigeinstrument nach Anspruch 4, **dadurch gekennzeichnet, dass** die Oberfläche der Außenseite (9) des Zifferblattes (8, 16) eine matt aushärtende Lackierung oder eine Aufrauung aufweist.

6. Anzeigeinstrument nach einem der vorhergehenden Ansprüche, **dadurch gekennzeichnet, dass** das Zifferblatt (8, 16) eine Trübscheibe ist.

7. Anzeigeinstrument nach Anspruch 6, **dadurch gekennzeichnet, dass** die Skalierung (13, 20) in das Zifferblatt (8, 16) eingraviert ist.

8. Anzeigeinstrument nach einem der vorhergehenden Ansprüche, **dadurch gekennzeichnet, dass** die Zeigerbeleuchtung eine drehfest mit dem Zeiger (41) verbundene Lichtquelle (40) aufweist.

9. Anzeigeinstrument nach Anspruch 8, **dadurch gekennzeichnet, dass** die Lichtquelle (40) an einer Zeigerfahne des Zeigers (41) angeordnet ist.

10. Anzeigeinstrument nach einem der Ansprüche 1 bis 7, **dadurch gekennzeichnet, dass** die Zeigerbeleuchtung eine feststehende Lichtquelle (2) aufweist und dass von der Lichtquelle (2) abgestrahltes Licht (14) in den Zeiger (4) einkoppelbar ist.

11. Anzeigeinstrument nach Anspruch 10, **dadurch gekennzeichnet, dass** im Übertragungsweg des von der Lichtquelle (2) abgestrahlten Lichts (14) zwischen Lichtquelle (2) und Zeiger (4) ein Lichtleiter angeordnet ist.

12. Anzeigeinstrument nach einem der vorhergehenden Ansprüche, **dadurch gekennzeichnet, dass** der Zeiger (4) ein Mittel zur Projektion der von der Lichtquelle (2) abgegebenen Lichtstrahlung (14) auf einen Teilbereich des Zifferblattes (8) aufweist.

13. Anzeigeinstrument nach einem der vorhergehenden Ansprüche, **dadurch gekennzeichnet, dass** das Zifferblatt (8,16) eine zum Ablesen des unbeleuchteten Zeigers (4, 41) geeignete Lichtdurchlässigkeit aufweist.

14. Anzeigeinstrument nach einem der vorhergehenden Ansprüche, **dadurch gekennzeichnet, dass** das Anzeigeinstrument ein zumindest zwei Anzeigen (1, 21, 23) aufweisendes Kombinationsinstrument (43) ist.

15. Anzeigeinstrument nach Anspruch 14, **dadurch gekennzeichnet, dass** eine der Anzeigen (1, 21, 23) ein Zeigerinstrument (1) und eine weitere ein Bildschirm (23) ist, wobei das Zifferblatt (16) im Bereich des Bildschirms (23) eine Ausnehmung (36) aufweist.

16. Anzeigeinstrument nach Anspruch 15, **dadurch gekennzeichnet, dass** der Bildschirm (23) ein LCD ist und dass der dem Betrachter zugewandte Frontpolarisator des LCD eine reflexionsmindernde Oberfläche aufweist.

17. Anzeigeinstrument nach einem der vorhergehenden Ansprüche, **dadurch gekennzeichnet, dass** das Anzeigeinstrument (1, 43) gegenüber der Vertikalen in Richtung auf einen Betrachter zu nach unten geneigt ist.

18. Anzeigeinstrument nach einem der vorhergehenden Ansprüche, **dadurch gekennzeichnet, dass** die Skalierung (13, 20) durchscheinend ist.

19. Anzeigeinstrument nach einem der vorhergehenden Ansprüche, **dadurch gekennzeichnet, dass** die Farbe der Grundfläche (44) des Zifferblattes (16) rot und die Farbe der Skalierung (20) blau ist.

20. Anzeigeinstrument nach einem der vorhergehenden Ansprüche, **dadurch gekennzeichnet, dass** die Farben der Grundfläche (44) des Zifferblattes (16) und der Skalierung (20) auf das Zifferblatt (16) aufgedruckt sind.

21. Anzeigeinstrument nach einem der vorhergehenden Ansprüche, **dadurch gekennzeichnet, dass** das Zifferblatt (16) in seinen Bereichen außerhalb von Anzeigen (1, 21, 23) eine Maskierung (45) geringer Transmission aufweist.

22. Anzeigeinstrument nach einem der vorhergehenden Ansprüche, **dadurch gekennzeichnet, dass** das Zifferblatt (8, 16) an seiner dem Betrachter zugewandten Außenseite (9) eine kratzfeste Beschichtung aufweist.

## Claims

1. Indicating instrument, in particular for a vehicle, having a pointer, which is connected fixed in terms of rotation to a pointer shaft and can be driven by the pointer shaft, a pointer illumination and a dial, the dial having a scale for representing a value of a variable shown by the pointer, the dial (8, 16) being translucent, and the pointer (4) being arranged on the opposite side of the dial (8) from a viewer, the scale (13, 20) being arranged on the opposite side of the dial (8, 16) from the viewer, the main area (44) of the dial (16) being of a first colour and the scale (20) being of a second colour, **characterized in that** the main area (44) of the dial (16) has a low transmission level when illuminated with light of the colour of the scale (20), that a light source (30, 31) is provided for transmissive illumination of the dial (16), and **in that** the colour of the light source (30, 31) corresponds approximately to the colour of the scale (20), that the pointer (4, 41) is illuminated with a colour which corresponds approximately to the colour of the main area (44) of the dial (16) and that the main area (44) of the dial (16) and the scale (20) each have a high transmission level when illuminated with light of a colour which corresponds approximately to their respective colour.

2. Indicating instrument according to Claim 1, **characterized in that** the dial (8, 16) is diffusely translucent.

3. Indicating instrument according to Claim 1 or 2, **characterized in that** the surface of the outer side (9) and/or of the inner side (7) of the dial (8, 16) is reflection-reducing.

4. Indicating instrument according to one of the preceding claims, **characterized in that** the surface of the outer side (9) of the dial (8, 16) is dull.

5. Indicating instrument according to Claim 4, **characterized in that** the surface of the outer side (9) of the dial (8, 16) has a surface coating which cures with a dull finish, or has a roughened finish.

6. Indicating instrument according to one of the preceding claims, **characterized in that** the dial (8, 16) is an opal plate.

7. Indicating instrument according to Claim 6, **characterized in that** the scale (13, 20) is engraved into the dial (8, 16).

8. Indicating instrument according to one of the preceding claims, **characterized in that** the pointer illumination has a light source (40) which is connected fixed in terms of rotation to the pointer (41).

9. Indicating instrument according to Claim 8, **characterized in that** the light source (40) is arranged on a pointer vane of the pointer (41).

10. Indicating instrument according to one of Claims 1 to 7, **characterized in that** the pointer illumination has a fixed light source (2), and **in that** light (14) which is emitted by the light source (2) can be injected into the pointer (4).

11. Indicating instrument according to Claim 10, **characterized in that** a light guide is arranged in the transmission path of the light (14) which is emitted by the light source (2), between the light source (2) and the pointer (4).

12. Indicating instrument according to one of the preceding claims, **characterized in that** the pointer (4) has a means for projecting onto a region of the dial (8) the light beams (14) which are emitted by the light source (2).

13. Indicating instrument according to one of the preceding claims, **characterized in that** the dial (8, 16) has an optical transparency which is suitable for reading the unilluminated pointer (4, 41).

14. Indicating instrument according to one of the preceding claims, **characterized in that** the indicating instrument is a combination instrument (43) having at least two displays (1, 21, 23).

15. Indicating instrument according to Claim 14, **characterized in that** one of the displays (1, 21, 23) is a pointer instrument (1) and a further display is a screen (23), the dial (16) having a cut-out (36) in the region of the screen (23).

16. Indicating instrument according to Claim 15, **characterized in that** the screen (23) is an LCD, and **in that** the front polarizer of the LCD, facing the viewer, has a reflection-reducing surface.

17. Indicating instrument according to one of the preceding claims, **characterized in that** the indicating instrument (1, 43) is inclined downward with respect to the vertical in the direction of a viewer.

18. Indicating instrument according to one of the preceding claims, **characterized in that** the scale (13, 20) is translucent.

19. Indicating instrument according to one of the preceding claims, **characterized in that** the colour of the main area (44) of the dial (16) is red, and the colour of the scale (20) is blue.

20. Indicating instrument according to one of the preceding claims, **characterized in that** the colours of the main area (44) of the dial (16) and of the scale (20) are printed onto the dial (16).

21. Indicating instrument according to one of the preceding claims, **characterized in that** the dial (16) has, in its regions outside displays (1, 21, 23), a masked area (45) with a low transmission level.

22. Indicating instrument according to one of the preceding claims, **characterized in that** the dial (8, 16) has a scratch-resistant coating on its outer side (9) facing the viewer.

## Revendications

1. Instrument d'affichage, notamment pour un véhicule, avec une aiguille reliée en rotation à un chevillot et pouvant être entraînée par le chevillot, un éclairage d'aiguille et un cadran, le cadran présentant une graduation pour représenter une valeur d'une grandeur indiquée par l'aiguille, le cadran (8, 16) étant traversante et l'aiguille (4) étant disposée sur le revers du cadran (8), opposé à un observateur, la graduation (13, 20) étant située sur le revers du cadran (8, 16) opposé à l'observateur, la surface de base (44) du cadran (16) présentant une première couleur et la graduation (20), une deuxième couleur, **caractérisé en ce que** la surface de base (44) du cadran (16) présente une transmission faible lors d'un éclairage avec une lumière de la couleur de la graduation (20), **en ce qu'**une source de lumière (30, 31) est prévue pour un éclairage transmissif du cadran (16) et **en ce que** la couleur de la source de lumière (30, 31) correspond approximativement à la couleur de la graduation (20), **en ce que** l'aiguille (4, 41) est éclairée dans une couleur correspondant approximativement à la couleur de la surface de base (44) du cadran (16) et **en ce que** la surface de base (44) du cadran (16) et la graduation (20) présentent respectivement une transmission élevée lors d'un éclairage avec une lumière dont la couleur correspond approximativement à leur couleur respective.

2. Instrument d'affichage selon la revendication 1, **caractérisé en ce que** le cadran (8, 16) est translucide de façon diffuse.

3. Instrument d'affichage selon la revendication 1 ou 2, **caractérisé en ce que** la surface du côté externe (9) et/ou du côté interne (7) du cadran (8, 16) diminue la réflexion.

4. Instrument d'affichage selon l'une des revendications précédentes, **caractérisé en ce que** la surface du côté externe (9) du cadran (8, 16) est mate.

5. Instrument d'affichage selon la revendication 4, **caractérisée en ce que** la surface du côté externe (9) du cadran (8, 16) présente un laquage durcissant mat ou une grenure.

6. Instrument d'affichage selon l'une des revendications précédentes, **caractérisé en ce que** le cadran (8, 16) est une vitre opaque.

7. Instrument d'affichage selon la revendication 6, **caractérisé en ce que** la graduation (13, 20) est gravée dans le cadran (8, 16).

8. Instrument d'affichage selon l'une des revendications précédentes**, caractérisé en ce que** l'éclairage de l'aiguille présente une source de lumière (40) reliée en rotation à l'aiguille (41).

9. Instrument d'affichage selon la revendication 8, **caractérisé en ce que** la source de lumière (40) est disposée sur un curseur d'aiguille de l'aiguille (41).

10. Instrument d'affichage selon l'une des revendications 1 à 7, **caractérisé en ce que** l'éclairage de l'aiguille présente une source de lumière fixe (2) et **en ce que** la lumière (14) projetée par la source de lumière (2) peut être couplée dans l'aiguille (4).

11. Instrument d'affichage selon la revendication 10, **caractérisé en ce que** dans le trajet de transmission de la lumière (14) projetée par la source de lumière (2) est disposée une aiguille lumineuse entre la source de lumière (2) et l'aiguille (4).

12. Instrument d'affichage selon l'une des revendications précédentes, **caractérisé en ce que** l'aiguille (4) présente un moyen pour la projection du rayonnement lumineux (14) dégagé par la source de lumière (2) sur une zone partielle du cadran (8).

13. Instrument d'affichage selon l'une des revendications précédentes, **caractérisé en ce que** le cadran (8, 16) présente une transparence appropriée pour la lecture de l'aiguille non éclairée (4, 41).

14. Instrument d'affichage selon l'une des revendications précédentes, **caractérisé en ce que** l'instrument d'affichage est un instrument de combinaison (43) présentant au moins deux affichages (1, 21, 23).

15. Instrument d'affichage selon la revendication 14, **caractérisé en ce que** l'un des affichages (1, 21, 23) présente un instrument à aiguille (1) et l'autre un écran (23), le cadran (16) présentant un évidement (36) dans la zone de l'écran (23).

16. Instrument d'affichage selon la revendication 15, **caractérisé en ce que** l'écran (23) est un LCD et **en ce que** le polariseur frontal, orienté vers l'observateur, de l'LCD présente une surface diminuant la réflexion.

17. Instrument d'affichage selon l'une des revendications précédentes, **caractérisé en ce que** l'instrument d'affichage (1, 43) est incliné vers le bas par rapport aux verticales en direction d'un observateur.

18. Instrument d'affichage selon l'une des revendications précédentes, **caractérisé en ce que** la graduation (13, 20) est traversante.

19. Instrument d'affichage selon l'une des revendications précédentes, **caractérisé en ce que** la couleur de la surface de base (44) du cadran (16) est rouge et la couleur de la graduation (20) est bleue.

20. Instrument d'affichage selon l'une des revendications précédentes**, caractérisé en ce que** les couleurs de la surface de base (44) du cadran (16) et de la graduation (20) sont imprimées sur le cadran (16).

21. Instrument d'affichage selon l'une des revendications précédentes, **caractérisé en ce que** le cadran (16) présente dans ses zones situées à l'extérieur des affichages (1, 21, 23) un dispositif de masquage (45) de transmission plus faible.

22. Instrument d'affichage selon l'une des revendications précédentes, **caractérisé en ce que** le cadran (8, 16) présente sur son côté externe orienté vers l'observateur, une enduction résistant à l'abrasion.
